# EUROPEAN PATENT APPLICATION

(11) **EP 0 639 433 A1**
(43) Date of publication of application: **22.02.1995**
(21) Application number: 94306103.6
(22) Date of filing: 18.08.1994
(51) Int. Cl.: B27C 1/10, B23Q 35/10

(54) **Improvement in and relating to hand held power tools**

(30) Priority: 19.08.1993 GB 9317242
(71) Applicant: SHARPE, Stephen Edwin, Barton on Humber, South Humberside DN18 5DX (GB)
(72) Inventor: SHARPE, Stephen Edwin, Barton on Humber, South Humberside DN18 5DX (GB)
(74) Representative: Walker, Antony James Alexander

(57) **Abstract**

A hand held, power driven planing tool (1) is fitted with at least one guide/guard member (2, 3). The guide/guard member (2, 3) comprises a first portion (5) which facilitates attachment to the planing tool (1) and a second portion (7) which is angled relative to the first portion. In use, a template defining the desired profile of a workpiece is attached to the side of an unworked workpiece and the said second portion of the guide/guard member is braced against the side of the workpiece. As the workpiece is worked by the planing tool the said second portion of the guide/guard member engages with and follows the template thereby ensuring that the profile of the finished workpiece exactly reproduces the shape of the template.

## Description

The present invention relates to power tools for shaping, shaving, chamfering, trimming and otherwise working on workpieces of wood and other similar materials. Such a power tool is disclosed and described in European Patent No. 0396582. More specifically, the present invention relates to a novel design of guide/guard member for use therewith. This guide/guard member is capable of following the shape of a template secured to a workpiece so as to reproduce the shape of the template in the surface of the workpiece.

European Patent No. 0396582 discloses a hand held, power driven planing tool which comprises a rotatably driven cylindrical cutter block carrying one or more cutting blades mounted in a housing. The planing tool is supported, in use, against the surface of a workpiece by front and rear sole plates. These sole plates are spaced from each other to define an elongate slot therebetween through which the cutting blades extend to engage the surface of the workpiece as the cutter block is rotated.

A guide/guard member is releasably secured to the housing at each end of the elongate slot defined between the front and rear sole plates. The position of each guide/guard member is adjustable to partially cover the elongate slot and thereby vary the effective length of the cutting blades which are exposed therethrough. In this way it is possible to ensure that no more of the cutting blades than is necessary to work the workpiece is exposed, thus minimising any risk of accidental contact with the cutting blades by the operator.

The guide/guard members each take the form of an angled bracket one leg of which facilitates attachment to the planing tool and the other leg of which is shaped and curved around an axis angled relative to the longitudinal axis of the slot and contained in a plane perpendicular to the plane of the slot and passing through the longitudinal axis thereof.

These curved and angled guide members allow a workpiece having a curved or straight edge to be accurately chamfered. However, they cannot be employed to quite the same effect in situations which require relatively complex profiles, including concave and convex curves, to be made in the surface of a workpiece.

It is an object of the present invention to provide a guide/guard member for use with a power tool of the type disclosed and described in European Patent No. 0396582 which is capable of following a template secured to a workplate so as to ensure a perfect reproduction of the template shape in the workpiece.

According to a first aspect of the present invention there is provided a guide/guard member for use with a hand held, power driven planing tool such as is disclosed and described in European Patent No. 0396582, which guide member comprises a first portion which facilitates attachment thereof to the planing tool and a second portion which is angled relative to the said first portion and which is intended, in use, to be braced against the side of a workpiece to be worked, characterised in that the bottom edge of the said second portion defines a point contact which, in use, engages with and can follow the shaped edge of a template attached to the side of the workpiece against which the said second portion is braced so as to ensure that the profile of the finished workpiece exactly reproduces the shape of the template.

The bottom edge of said second portion of the guide/guard member may be curved to enable concave and convex curves in a template to be followed smoothly. Alternatively the said second portion may take the form of a relatively narrow and short spike the point of which is intended, in use, to follow the shaped edge of a template.

In order to facilitate tracking of the shaped edge of a template a roller or ball bearing may be carried by the guide/guard member at the point of contact therewith.

In one preferred embodiment of the guide/guard member according to the present invention the said second portion thereof defines a curved or V-shaped profile about an axis which lies in a plane angled relative to the said first portion thereof. This plane may lie perpendicular to the said first portion, but can lie at an acute angle relative thereto.

Preferably, the length of the said second portion of the guide/guard member, that is to say the distance between the said first portion and the bottom edge or point of contact of the second portion, is adjustable. This allows the depth to which material is removed from a workpiece to be altered without it being necessary to re-position the template.

According to a second aspect of the present invention there is provided a hand held, power driven planing tool fitted with at least one guide/guard member according to the first aspect of the present invention in combination with a template, the template being attached, in use, to the side of a workpiece so as to facilitate profiling of the workpiece with the planing tool to exactly reproduce the shape thereof.

Embodiments of the present invention will now be described, by way of example, with reference to the accompanying drawings, in which:
Fig. 1 shows a hand held, power driven planing tool fitted with a "curved" guide/guard member at each end of the elongate slot through which the cutting blades extend;
Fig. 2 shows an end view of another guide/guard member for use with the hand held, power driven planing tool shown in Fig. 1;
Fig. 3 is a schematic side view of a workpiece to which a template is attached and illustrates how the guide/guard member fitted to the hand held, power driven planing tool shown in Fig. 1 follows the template to ensure that the profile of the finished workpiece exactly reproduces the shape of the template.
Fig. 4 shows a hand held, power driven planing tool fitted with yet another guide/guard member at each end of the elongate slot through which the cutting blades extend; and,
Fig. 5 is a schematic plan view of a workpiece to which a template is attached and illustrates how the guide/guard members fitted to the hand held, power driven planing tool shown in Fig. 4 enable curved workpieces to be shaped and profiled to exactly reproduce the shape of the template.

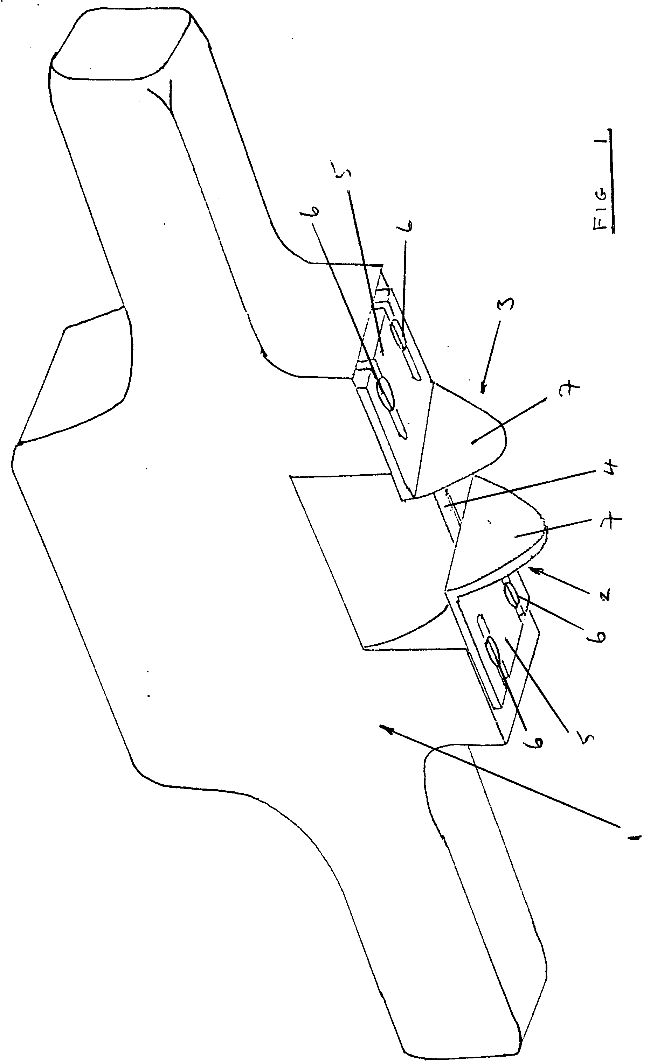

Referring to Fig. 1 of the accompanying drawings there is shown a hand held, power driven planing tool 1 of the type disclosed and described in detail in European Patent No. 0396582. The planing tool has a guide/guard member 2, 3 attached to it at each end of the elongate slot 4 through which the cutting blades (not visible) extend. As described in European Patent No. 0396582 the position of each guide/guard member 2, 3 relative to the elongate slot 4 can be adjusted so as to vary the effective length of the cutter blades which are exposed therethrough.

Each guide/guard member 2, 3 comprises a first portion 5 having a pair of elongate, open ended slots therein and is attached to the planing tool 1 by means of locking screws 6 which are screwed into the power tool housing through the open ended elongate slots. The position of each guide/guard member 2, 3, relative to the elongate slot 4, and hence the effective length of the cutting blades (not visible) exposed therethrough can be varied by slackening the locking screws 6 and sliding the guide/guard members 2, 3.

Each guide/guard member 2, 3 also comprises a second portion 7 which is perpendicular to the first 5 and in use this second portion 7 is braced against the side of a workpiece to hold the planing tool in position relative thereto whilst the upper surface thereof is cut to shape.

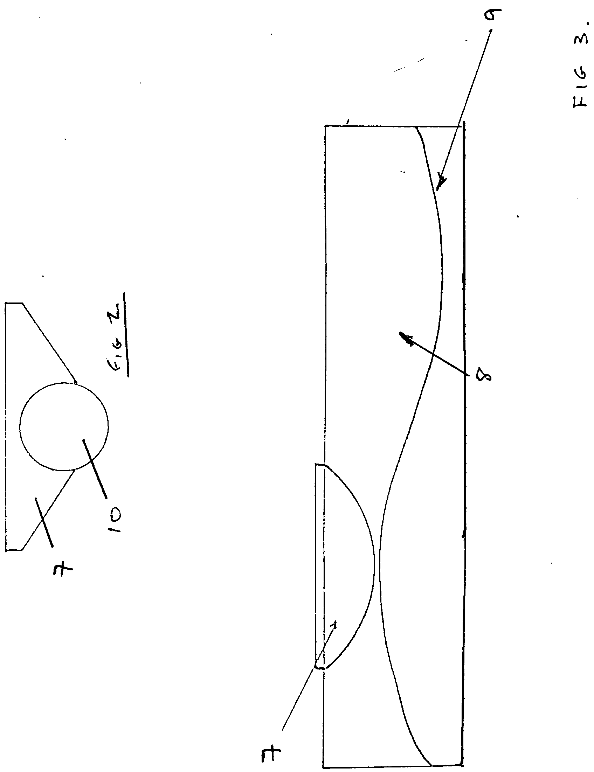

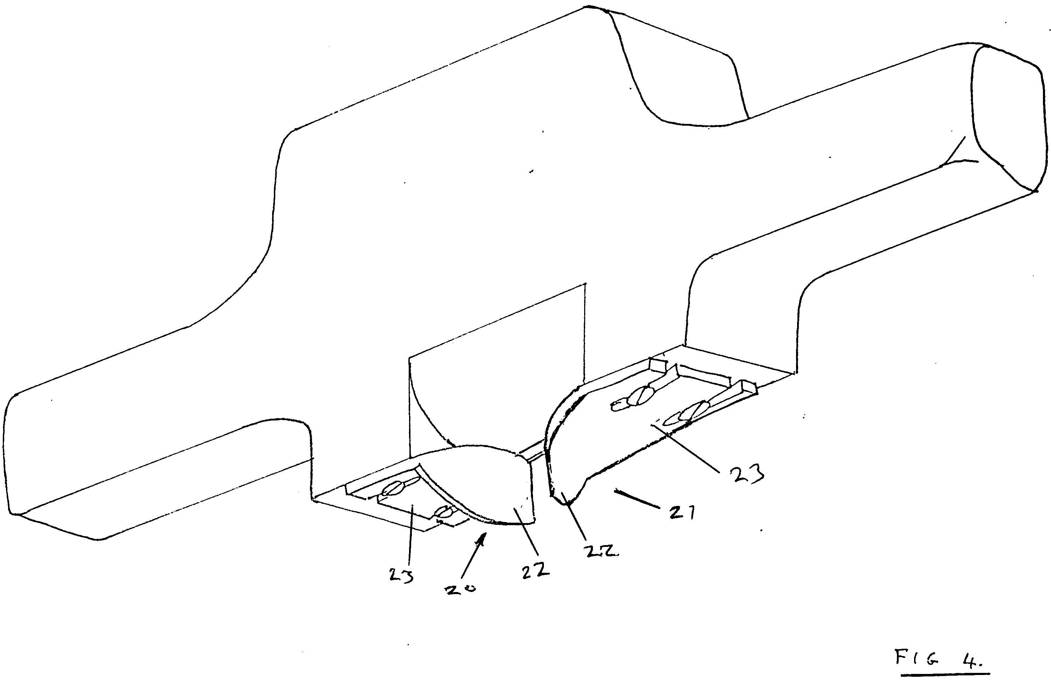

As shown in Fig. 1 the bottom edge of the second portion 7 of each guide/guard member 2, 3 is curved. As illustrated in Fig. 3 of the drawings when in use to cut shaped profiles in the upper surface of a workpiece 8, a template 9 is secured to one or, if required, both sides of the workpiece 8. The planing tool 1 is then moved over the upper surface of the workpiece 8. As waste material is removed from the workpiece 8 one or both guide/guard members 2, 3 contact the template 9 which acts as a depth stop to prevent further material from being cut away at that point and eventually the upper surface of the workpiece 8 will assume the exact shape of the template 9.

The curved bottom edge of the second portion 7 of the guide/guard members 2, 3 ensure smooth movement when contact is made with the template 9 and enable convex and concave template shapes to be followed. However, as an alternative to this a roller 10 may be fitted to the second portion 7 of each guide member 2, 3, as illustrated in Fig. 2 of the drawings. Again, this ensures smooth movement along the edge of a template and provides a depth stop.

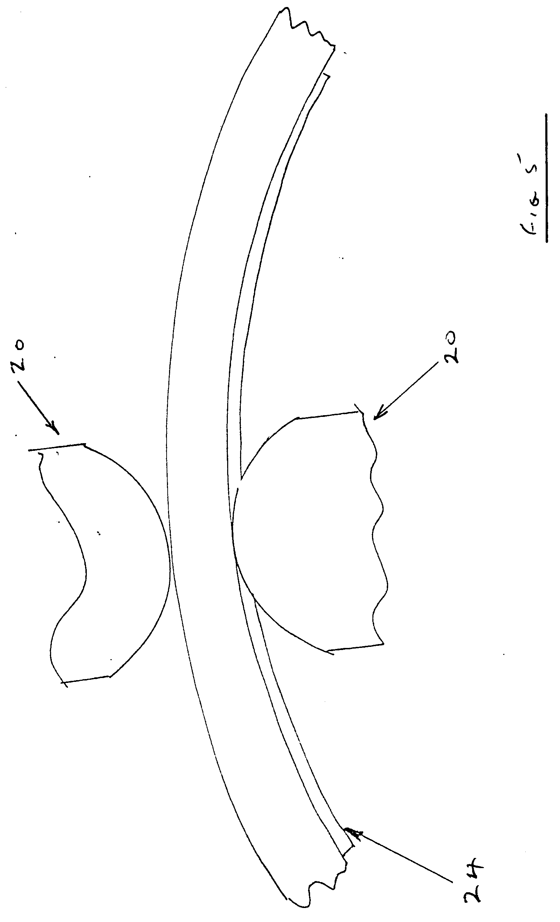

Referring now to Fig. 4 of the drawings there is shown yet another embodiment of the guide/guard members 20, 21 according to the present invention. The guide/ guard members 20, 21 shown in Fig. 4 are basically the same as those shown in Fig. 1 except that the second portion 22 thereof is curved about an axis which lies in a plane perpendicular to the first portion 23 thereof. As illustrated in Fig. 5 the guide members 20, 21 enable the planing tool to be used on workpieces in which the sides thereof, to which the template 24 is fixed, to be followed as the upper surface thereof is shaped to follow the line of the template 24.

It is possible to shape and profile workpieces using the planing tool described in European Patent No. 0396582, whether with or without guide members. However, the job is made easier and simpler using a planing tool fitted with guide members in accordance with the present invention and used in combination with a template. Using this arrangement it is possible to make quite complex shapes and profiles in a workpiece.

## Claims

1. A guide/guard member for use with a hand held, power driven planing tool to shape and profile a workpiece,which guide member comprises a first portion (5) which facilitates attachment thereof to the planing tool and a second portion (7) which is angled relative to the said first portion (5) and which is intended, in use, to be braced against the side of a workpiece to be worked, characterised in that the bottom edge of the said second portion (7) defines a point contact which, in use, engages with and can follow the shaped edge of a template attached to the side of the workpiece against which the said second portion (7) is braced so as to ensure that the profile of the finished workpiece exactly reproduces the shape of the template.

2. A guide/guard member according to Claim 1, characterised in that the bottom edge of said second portion (7) of the guide/guard member is curved to enable concave and convex curves in a template to be followed smoothly.

3. A guide/guard member according to Claim 1, characterised in that the said second portion (7) takes the form of a relatively narrow and short spike, the point of which is intended, in use, to follow the shaped edge of a template.

4. A guide/guard member according to any preceding Claim characterised in that a roller or ball bearing is carried by the guide/guard member at the intended point of contact with the shaped edge of a template.

5. A guide/guard member according to any preceding Claim characterised in that the said second portion (7) defines a curved or V-shaped profile about an axis which lies in a plane angled relative to the said first portion (5) thereof.

6. A guide/guard member according to any preceding
Claim, characterised in that the length of the said second portion (7), that is to say the distance between the said first portion (5) and the bottom edge or point of contact of the second portion (7) with a template, is adjustable.

7. A hand held, power driven planing tool (1) fitted with at least one guide/guard member (2, 3) according to any preceding Claim in combination with a template (9), the template (9) being attached, in use, to the side of a workpiece so as to facilitate profiling of the workpiece with the planing tool (1) to exactly reproduce the shape thereof.
